# EUROPEAN PATENT APPLICATION

(11) **EP 1 803 348 A1**
(43) Date of publication of application: **04.07.2007**
(21) Application number: 06000031.2
(22) Date of filing: 02.01.2006
(51) Int. Cl.: A01M 1/14, A01M 1/04

(54) **Solar insect killer and catcher**

(71) Applicant: Aleague International Co., Taipei 104 (TW)
(72) Inventor: Lin, Chin-Kuo, Taipei 104 (TW)
(74) Representative: Viering, Jentschura & Partner

(57) **Abstract**

A solar insect killer and catcher is disclosed, which mainly comprises a casing (1), a solar plate (2), a power supply (3), a control switch (4), a timer (5), a circuit board (61) and a plurality of light-emitting elements (62) able to emit the lights having various wavelengths. The casing is transparent and hollow. The upper end of the inner wall surface of the casing is provided with the solar plate. The bottom surface of the circuit board is provided with the plurality of light-emitting elements able to emit the lights having various wavelengths. When the casing emits the lights having various wavelengths according to the preset timings, many kinds of insects can be attracted by the lights and then fly into the water-collecting basin (8) or water-collecting pit. As a result, the insects cannot escape from the water collecting basin or water collecting pit and be captured therein.

## Description

### BACKGROUND OF THE INVENTION

### 1. Field of Invention

The present invention relates to a solar insect killer and catcher. In particular, the present invention employs a principle that the insects can be attracted by light sources having various wavelengths. A casing is provided with a plurality of light-emitting elements able to emit the lights having various wavelengths. With such arrangement, many kinds of insects can be attracted by the light sources having various wavelengths, and then fly into a preset water-collecting basin or water-collecting pit. When the insects falls into the water collecting basin or water collecting pit, they are captured and thus cannot escape from there.

### 2. DESCRIPTION OF THE PRIOR ART

In the ambient environment of daily life, there are many kinds of insects. Some insects are harmful to people. The major harmful insects in the house are mosquitoes. Since the mosquitoes can bite the human body, they are troublesome and make people intolerable. Further, some insects are harmful to the plants and thus such kinds of insects are also troublesome to farmers, flower farmers and fruit farmers because they will cause a certain degree of loss to the plants. No doubt, those harmful insects are a big trouble to the planting industry.

A general method for prevent those harmful insects is to use a mosquito catcher lamp. The mosquito catcher lamp employs the phototaxis and the sensitivity to specific wavelengths of the mosquitoes. Accordingly, the mosquitoes can be attracted by the light of a lamp tube and thus contact an electric net surface. As a result, the mosquitoes can be instantaneously burned by the high-volt electricity produced on the electric net. An electric mosquito racket also employs the similar principle. However, the mosquito catcher lamp may be potentially dangerous to the elders or children in the family because watching the lamp tube for a long time may cause the pathology of cataracts. Further, if the children curiously touch the electric net with their fingers, they will be struck by high-volt electricity. Further, turning on the mosquito catcher lamp for a long time will inevitably increase the expense of electricity. Even though the electric mosquito racket is powered by dry batteries, it is still possible that the user may accidentally touch the electric net.

Therefore, the above conventional devices really have some drawbacks and need to be improved.

In view of the drawbacks of the conventional mosquito catcher lamp, the inventor of the present invention thus provides a solar insect killer and catcher based on his expert experience and research.

### SUMMARY OF THE INVENTION

The object of the present invention is to provide a solar insect killer and catcher. The present invention employs a principle that insects will be attracted by light sources having various wavelengths. A casing is provided with a plurality of light-emitting elements able to emit the lights having various wavelengths. With such arrangement, many kinds of the insects can be attracted by the light sources having various wavelengths, and then fly into a preset water-collecting basin or water-collecting pit. When the insects fall into the water-collecting basin or water-collecting pit, they are captured and thus cannot escape from there.

Another object of the present invention is to provide a solar insect killer and catcher, in which a solar plate is provided to transform the solar energy into electricity and the transformed electricity can be saved by a power supply. With the above arrangement, the present invention does not need to provide any external power supply.

Another object of the present invention is to provide a solar insect killer and catcher, which is simple in structure, easy to operate and low in cost.

In order to achieve the above objects, the solar insect killer and catcher of the present invention comprises a casing, a solar plate, a power supply, a control switch, a timer, a circuit board and a plurality of light-emitting elements able to emit the lights having various wavelengths. The casing is transparent and hollow. The upper end of the inner wall surface of the casing is provided with a solar plate. The solar plate can receive the solar energy and then transform it into electricity. The solar plate is connected to the power supply for saving the electricity transformed by the solar plate. The power supply is connected to the control switch and the timer. The control switch and the timer are provided on the outer side of the casing, respectively. A supporting hook or supporting ring is provided at a proper position outside the casing for hanging the casing. Alternatively, a supporting frame, supporting net or supporting basket having a proper height can be provided. The circuit board is provided at a proper position in the casing. The bottom surface of the circuit board is provided with the plurality of light-emitting elements able to emit the lights having various wavelengths. The light-emitting elements can be turned on/off simultaneously or individually under the control of the timer. With the above components, the solar insect killer and catcher of the present invention can be obtained. When a user intends to kill or catch the insects, he/she only needs to turn on the switch to energize the light-emitting elements to emit the lights having various wavelengths. The timer can control the timing of the light-emitting elements to emit the lights. Finally, a water-collecting basin is provided or a water-collecting pit is dug outdoors. When the casing emits the lights having various wavelengths according to the preset timings, many kinds of insects can be attracted by the lights and then fly into the water-collecting basin or water-collecting pit. As a result, the insects cannot escape from the water collecting basin or water collecting pit and be captured therein.

These features and advantages of the present invention will be fully understood and appreciated from the following detailed description of the accompanying drawings.

### BRIEF DESCRIPTION OF THE DRAWINGS

Fig. 1 is a perspective view showing a solar insect killer and catcher of the present invention;
Fig. 2 is a side view of the solar insect killer and catcher of the present invention;
Fig. 3 is a view showing another embodiment of the solar insect killer and catcher of the present invention; and
Fig. 4 is a view showing the operation of another embodiment of the solar insect killer and catcher of the present invention.

### DETAILED DESCRIPTION OF THE PREFERRED EMBODIMENT

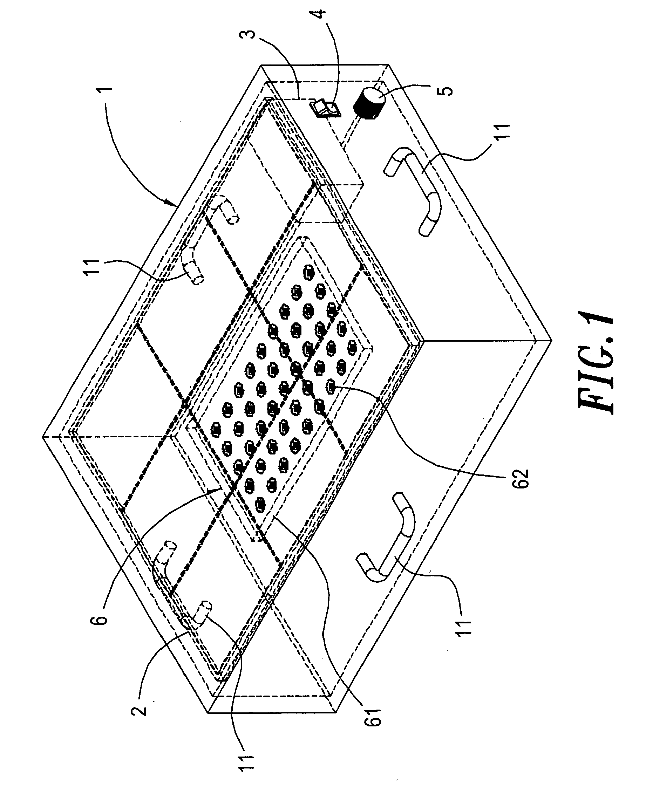

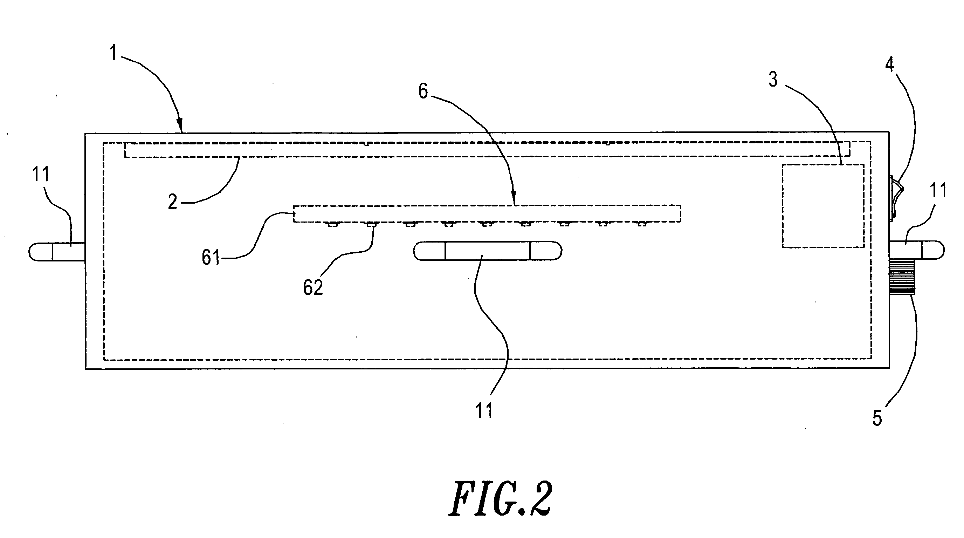

With reference to Figs. 1 to 4, the solar insect killer and catcher of the present invention mainly comprises a casing 1, a solar plate 2, a power supply 3 a control switch 4, a timer 5 and a light-emitting device 6.

The casing 1 is transparent and hollow. A hanging portion 11 is provided at a proper position on the outer edge of the casing 1 for hanging the casing 1. Alternatively, a supporting frame, supporting net or supporting basket having a proper height can be provided. The hanging portion 11 can be a supporting hook, supporting ring or other structure for supporting.

The solar plate 2 is provided on the upper end of the inner wall surface of the casing 1. The solar plate 2 can receive the solar energy and then transform it into electricity.

The power supply 3 is provided in the casing 1 and connected to the solar plate 2. The power supply 3 can save the electricity transformed by the solar plate 2 and supply the electricity. The power supply 3 can be battery or other devices having reserved power.

The control switch 4 is provided on the outer surface of the casing 1 and connected to the power supply 3. The control switch 4 can control the operation of the light-emitting device 5.

The timer 5 is provided on the outer surface of the casing 1 and connected to the power supply 3. The timer 5 can control the timings of the light-emitting elements 62 to emit the lights having various wavelengths.

The light-emitting device 6 is provided at a proper position in the casing 1, and mainly comprises a circuit board 61. The bottom surface of the circuit board 61 is provided with a plurality of light-emitting elements 62 able to emit the lights having various wavelengths. The circuit board 61 is connected to the control switch 4 and the timer 5.

With the above components, the solar insect killer and catcher of the present invention can be obtained. When a user intends to kill or catch the insects, he/she only needs to turn on the control switch 4 to energize the light-emitting elements 62 to emit the lights having various wavelengths. The timer 5 can control the timings of the light-emitting elements 62 to emit the lights circularly. As a result, the light-emitting device 6 periodically changes the lights having various wavelengths.

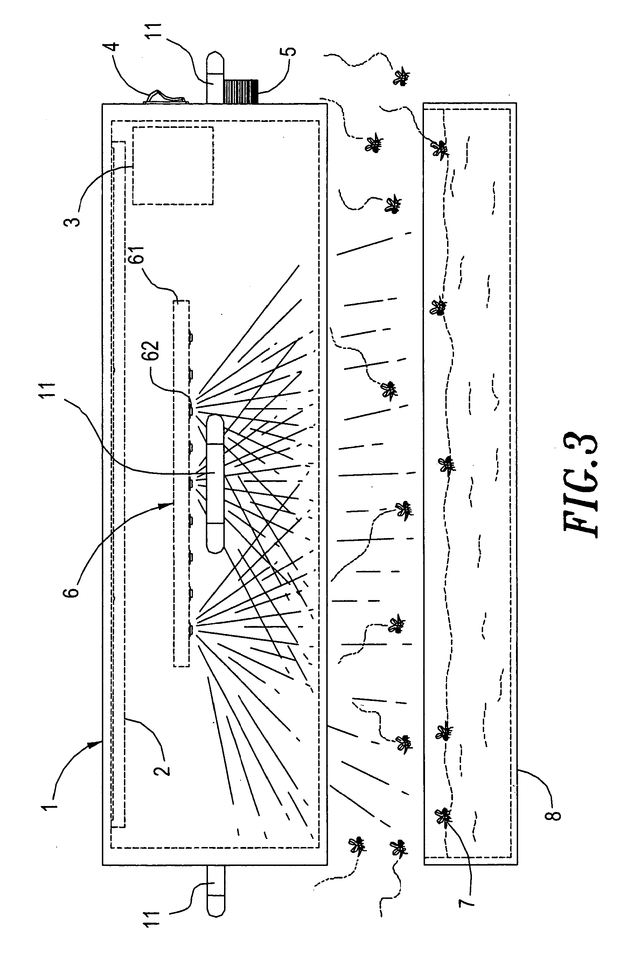

With reference to Fig. 3, it is a view showing another embodiment of the solar insect killer and catcher of the present invention. Since each kind of insects can be attracted by the light having specific wavelength, with providing the light-emitting elements 62 to emit the lights having various wavelengths in the casing 1, the user can preset the timing of each light-emitting element according to the species of the insects 7 to emit the lights having various wavelengths periodically from the casing 1 toward the ambient environment. Further, a water-collecting basin 8 is provided (or a water-collecting pit is dug) under the casing 1. At this time, many kinds of insects 7 fly into the light-emitting casing 1 and fall into the preset water-collecting basin 8 (water-collecting pit). Once the insects 7 are fallen into the water-collecting basin 8 (water-collecting pit), they are captured and thus cannot escape from there. Thus, the object for killing and catching insects can be effectively achieved.

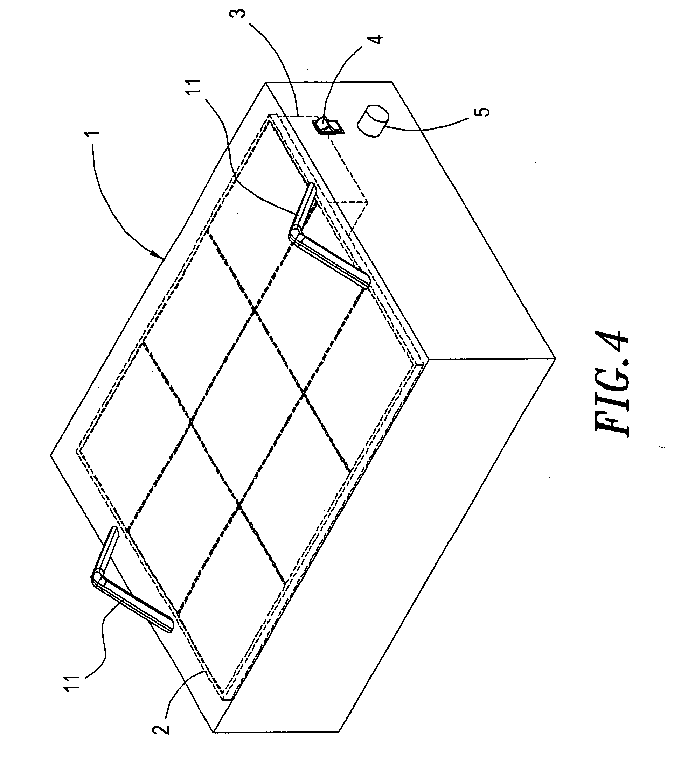

With reference to Fig. 4, it is a schematic view showing the operation of another embodiment of the solar insect killer and catcher of the present invention. The hanging portion 11 of the casing 1 can also be provided on the top surface of the casing 1 for hanging.

In comparison with the conventional art, the solar insect killer and catcher of the present invention has the following advantages:
(1) the present invention employs a principle that the insects can be attracted by light sources having various wavelengths. A casing is provided with a plurality of light-emitting elements able to emit the lights having various wavelengths. With such arrangement, many kinds of the insects can be attracted by the light sources having various wavelengths, and then fly into a preset water-collecting basin or water-collecting pit. When the insects fall into the water-collecting basin or water-collecting pit, they are captured and thus cannot escape from there.
(2) the present invention can provided a power supply. The solar plate is provided to transform the solar energy into electricity and the electricity can be saved by such a power supply. With the above arrangement, the present invention does not need to provide any external power supply
(3) the present invention is to provide a solar insect killer and catcher, which is simple in structure, easy to operate and low in cost, facilitating the popularization of the present invention.

Many changes and modifications in the abovementioned embodiment of the present invention can, of course, be carried out without departing from the scope thereof. Accordingly, to promote the progress in science and useful arts, the present invention is disclosed and is intended to be limited only by the scope of the appended claims.

## Claims

1. A solar insect killer and catcher, comprising:
a transparent and hollow casing 1, wherein a hanging portion 11 is provided at a proper position on the outside of the casing 1;
a solar plate 2 provided on an upper end of the inner wall surface of the casing 1;
a power supply 3 provided in the casing 3 and connected to the solar plate 2; and
a light-emitting device 6 provided in the casing 6 and having a circuit board 61, wherein the bottom of the circuit board 61 is provided with a plurality of light-emitting elements 62 able to emit lights having various wavelengths.

2. The solar insect killer and catcher according to claim 1, wherein the hanging portion 11 is a supporting hook, supporting ring or other structures for supporting.

3. The solar insect killer and catcher according to claim 1, wherein the solar plate 2 is cable of receiving the solar energy and transforming it into electricity.

4. The solar insect killer and catcher according to claim 1, wherein the power supply 3 is capable of saving the electricity transformed by the solar plate 2 and supplying the electricity.

5. The solar insect killer and catcher according to claim 1, wherein the power supply 3 is a battery or other devices having reserved electricity.

6. The solar insect killer and catcher according to claim 1, wherein a control switch 4 is provided on the outer side of the casing 1 and connected to the circuit board 61 for controlling the action of the light-emitting device 6.

7. The solar insect killer and catcher according to claim 1, wherein the a timer 5 is provided on the outer side of the casing 1 and connected to the circuit board 61 for controlling the timing of each light-emitting element 62 to emit lights having various wavelengths.

8. The solar insect killer and catcher according to claim 1, wherein a water-collecting basin 8 or water-collecting pit is provided under the casing 1 for receiving the fallen insects 7.
